# EUROPÄISCHE PATENTSCHRIFT

(11) **EP 1 845 401 B1**
(45) Veröffentlichungstag und Bekanntmachung des Hinweises auf die Patenterteilung: **28.09.2011**
(21) Anmeldenummer: 07005355.8
(22) Anmeldetag: 15.03.2007
(51) Int. Cl.: G02B 7/02, G01V 8/00, H01L 31/0232

(54) **Verfahren zur Justage wenigstens eines Optikelementes eines optischen Sensors**
Method of adjusting at least one optical element of a sensor
Prodédé d'ajustement d'au moins un élément optique d'un capteur

(30) Priorität: 11.04.2006 DE 102006016913
(43) Veröffentlichungstag der Anmeldung: 17.10.2007
(73) Patentinhaber: Leuze electronic GmbH + Co. KG, 73277 Owen/Teck (DE)
(72) Erfinder: Argast, Martin, 72584 Hülben (DE); Schwartz, Günther, 73235 Weilheim/Teck (DE); Doll, Manfred, 73230 Kirchheim/Teck (DE); Dümmel, Thomas, 72584 Hülben (DE)
(74) Vertreter: Ruckh, Rainer Gerhard

(56) Entgegenhaltungen:
- EP-A- 1 610 154
- EP-A- 1 731 926
- US-A1- 2002 075 916
- US-A1- 2004 016 873
- US-A1- 2004 075 917
- US-A1- 2004 080 642
- US-A1- 2005 013 562

## Beschreibung

Die Erfindung betrifft ein Verfahren zur Justage wenigstens eines Optikelements eines optischen Sensors gemäß dem Oberbegriff des Anspruchs 1.

Derartige optische Sensoren sind typischerweise als Lichtschranken, Reflexionslichtschranken, Lichttaster, Distanzsensoren und dergleichen ausgebildet und weisen einen Sendelichtstrahlen emittierenden Sender und einen Empfangslichtstrahlen empfangenden Empfänger auf, welche in einem gemeinsamen Gehäuse oder in gesamten Gehäusen untergebracht sind. Dem Sender und Empfänger als erste Optikelemente können als weitere Optikelemente Optiken wie Linsen oder auch Blenden zugeordnet sein.

Um eine fehlerfreie Funktion bei der Detektion von Objekten zu gewährleisten, müssen bei optischen Sensoren dieser Art einzelne Optikelemente justiert werden, um eine exakte vorgegebene Strahlführung der Sendelichtstrahlen bzw. Empfangslichtstrahlen zu erhalten.

Zu dieser Justage wird bei optischen Sensoren typischerweise die Position eines Optikelements wie einem Sender, Empfänger oder einer diesen Elementen zugeordneten Linse, mittels einer Einstellschraube verschoben. Die Einstellung erfolgt dabei gegen die Federkraft einer Feder.

Nachteilig hierbei ist einerseits, dass die Positionsgenauigkeit des Optikelements nur ungenügend ist. Zudem ist mit derartigen Einstellungsschrauben nur eine mangelhafte Lagefixierung des Optikelements in der eingestellten Justageposition möglich.

Aus der DE 103 26 848 B4 ist ein optischer Sensor bekannt, welcher zur Erfassung von Objekten in einem Überwachungsbereich dient. Der Sensor umfasst einen Sendelichtstrahlen emittierenden Sender, einen Empfangslichtstrahlen empfangenden Empfänger, eine diesem zugeordnete Empfangsoptik mit einem vorgegebenen von dem Empfangslichtstrahlen beaufschlagten Sichtfeld, eine Ablenkeinheit zur periodischen Ablenkung der Sendelichtstrahlen innerhalb eines vorgegebenen, den Überwachungsbereich definierenden Winkelbereichs und eine Auswerteeinheit, in welcher in Abhängigkeit der Empfangssignale am Ausgang des Empfängers ein Objektfeststellungssignal am Ausgang des Empfängers ein Objektfeststellungssignal generierbar ist. Im Sichtfeld der Empfangsoptik ist eine Nahbereichsoptik angeordnet ist, wobei mittels einer Justiereinheit der von der Nahbereichsoptik umfasste Teil des Sichtfelds der Empfangsoptik einstellbar ist. Für diese Einstellung ist eine Drehlagerung vorgesehen.

Aus der US 2005/0199792 A1 ist ein optischer Sensor bekannt, dessen optische und elektronische Komponenten in wenigstens einem Gehäuse integriert sind. Teile dieses Gehäuses bestehen aus einer Niederdruckmasse. Die Teile aus der Niederdruckmasse können zur Lagefixierung von Sensorkomponenten dienen.

Aus der DE 299 07 270 U1 ist eine Verbindungsvorrichtung für optoelektronische Bauteile eines optischen Sensors bekannt. Die Verbindungsvorrichtung umfasst zwei korrespondierende Kopplungselemente, insbesondere eine Anordnung von Führungsstiften als ersten Kopplungselementen und eine das optoeletrische Bauteil tragenden Platte mit Bohrungen, welche in die Führungsstifte eingeführt werden. Die Platte mit dem optoelektronischen Bauteil wird manuell an den Führungsstiften ausgerichtet und dann mit einer Klebmasse oder mit Lötzinn lagefixiert.

Nachteilig bei dieser Verbindung ist, dass die Justage des optoelektronischen Bauteils nur bei geeigneten optischen Sensoren erfolgen kann. Weiterhin ist nachteilig, dass das Aufbringen der Klebmasse oder des Lötzinns einen zusätzlichen, zeitaufwendigen Fertigungsschritt bei der Herstellung des optischen Sensors bedeutet.

Der Erfindung liegt die Aufgabe zugrunde ein Verfahren der eingangs genannten Art bereitzustellen, bei welchem mit konstruktiv geringem Aufwand eine genaue und reproduzierbare Justage von Optikelementen von optischen Sensoren ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Mit dem erfindungsgemäßen Verfahren wird wenigstens ein Optikelement eines optischen Sensors justiert. Der optische Sensor dient zur Erfassung von Objekten in einem Überwachungsbereich. Er umfasst als Optikelemente wenigstens einen Sendelichtstrahlen emittierenden Sender und einen Empfangslichtstrahlen empfangenden Empfänger, welche innerhalb eines Gehäuses angeordnet sind. Ein Optikelement ist durch wenigstens ein Stellelement justierbar und das justierte Optikelement ist durch eine in das Gehäuse eingespritzte Niederdruckmasse lagefixiert, wobei die Niederdruckmasse ein Dichtmittel für das Gehäuse bildet.

Ein wesentlicher Vorteil der Erfindung besteht darin, dass die Niederdruckmasse, die zur Abdichtung des Gehäuses des optischen Sensors dient, gleichzeitig zur Lagefixierung des justierenden Optikelements dient. Damit ist zur Lagefixierung des justierenden Optikelements kein separater Fertigungsschritt notwendig, wodurch die Fertigungszeiten zur Herstellung des optischen Sensors und auch deren Herstellkosten signifikant reduziert werden können.

Erfindungsgemäß wird die Niederdruckmasse selbst als Stellelement zur Justage verwendet. Diese Ausführungsform zeichnet sich durch einen besonders einfachen Aufbau aus, wobei besonders vorteilhaft ist, dass keine separaten Teile zur Ausbildung des Stellelements benötigt werden. Weiterhin ist vorteilhaft, dass in diesem Fall der Justagevorgang des Optikelements und dessen Lagefixieren durch das Einspritzen der Niederdruckmasse in einem einzigen Arbeitsgang durchgeführt werden kann. Besonders vorteilhaft sind zur Justage des Optikelements auf dieses von der Außenseite des Gehäuses her mehrere räumlich zueinander abgesetzte Einspritzkanäle vorgesehen. So kann die Position des Optikelements durch die Vorgabe der Reihenfolge, in welcher die Niederdruckmasse in die Einspritzkanäle eingespritzt wird, sowie der Vorgabe des jeweiligen Einspritzdrucks, mit welchem Niederdruckmasse in einen der Einspritzkanäle eingespritzt wird, genau vorgegeben werden.

Die Stellelemente können einerseits direkt auf die zu justierenden Optikelemente einwirken oder andererseits auf Bauteile, auf oder in welchen die Optikelemente einzeln oder in Mehrfachanordnungen angeordnet sind.

Die Optikelemente können einerseits von dem Sender und/oder dem Empfänger des optischen Sensors gebildet sein oder andererseits von diesen zugeordneten Elementen zwei Optiken, insbesondere Linsen, Blenden oder auch einem Sendelichtleiter, dessen Position relativ zum Sender in Form eines Sonderchips ausgerichtet werden muss.

Die Optikelemente wie ein Sender oder ein Empfänger können auf einer Leiterplatte angeordnet sein, deren Position mittels des Stellelements justierbar ist. Weiterhin kann eine Sendeoptik oder eine Empfangsoptik in Form einer Linse in einem Tubus als zu justierendes Bauteil angeordnet sein. Weiterhin kann ein Kollimator, in welchem ein Sender und eine Sendeoptik integriert sind, als zu justierendes Bauteil vorgesehen sein. Schließlich können Blenden als justierende Optikelemente vorgesehen sein.

Die Erfindung wird im Nachstehenden anhand der Zeichnungen erläutert. Es zeigen:
- Figur 1:: Blockschaltbild eines optischen Sensors.
- Figur 2:: Ausführungsbeispiel zur Justierung eines Optikelements eines optischen Sensors.
- Figur 3a:: Längsschnitt durch eine Variante des optischen Sensors gemäß Figur 2.
- Figur 3b:: Querschnitt durch den optischen Sensor

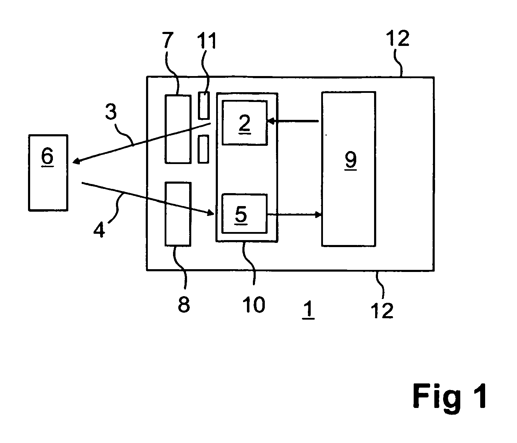

Figur 1 zeigt schematisch den Aufbau eines als Lichttaster ausgebildeten optischen Sensors 1. Der optische Sensor 1 umfasst einen Sender 2 in Form einer Leuchtdiode oder dergleichen, welcher Sendelichtstrahlen 3 emittiert. Weiterhin ist ein Empfangslichtstrahlen 4 empfangender Empfänger 5 vorgesehen, welcher von einer Photodiode oder dergleichen gebildet ist. Bei der Erfassung von Objekten 6 in einem Überwachungsbereich werden die Sendelichtstrahlen 3 zum jeweiligen Objekt 6 geführt und von dort als Empfangslichtstrahlen 4 zurück zum Empfänger 5 reflektiert. Zur Strahlformung der Sendelichtstrahlen 3 ist dem Sender 2 eine Sendeoptik 7 vorgeordnet. Mittels einer Empfangsoptik 8 erfolgt die Fokussierung der Empfangslichtstrahlen 4 auf den Empfänger 5.

Aus den Empfangssignalen am Ausgang des Empfängers 5 wird in einer Auswerteeinheit 9, die von einem Mikroprozessor oder dergleichen gebildet ist, ein binäres Objektfeststellungssignal generiert, dessen Schaltzustände angeben, ob sich ein Objekt 6 im Überwachungsbereich befindet oder nicht. Das Objektfeststellungssignal wird über einen nicht dargestellten Schaltausgang ausgegeben. Im vorliegenden Ausführungsbeispiel sind der Sender 2 und der Empfänger 5 auf einer gemeinsamen Leiterplatte 10 angeordnet. Weiterhin ist dem Sender 2 zur Ausblendung eines Teils der Sendelichtstrahlen 3 eine Blende 11 nachgeordnet. Sämtliche Komponenten des optischen Sensors 1 sind in einem Gehäuse 12 angeordnet.

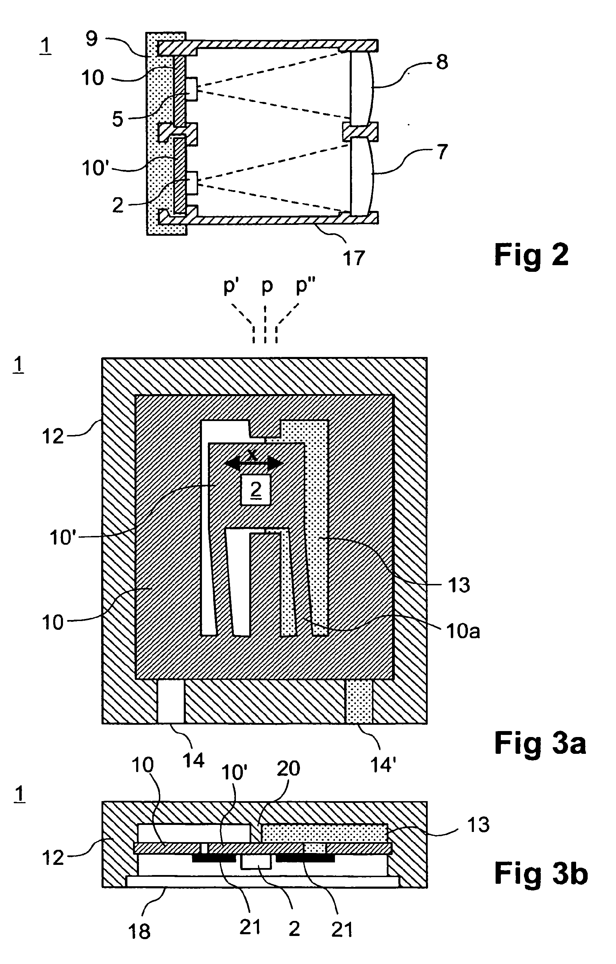

Figur 2 zeigt eine Ausführungsform eines optischen Sensors 1, bei welchem der Sender 2 auf einer ersten Leiterplatte 10' und der Empfänger 5 auf einer zweiten Leiterplatte 10 angeordnet sind. Die Leiterplatten 10, 10' sind zur Justage des Senders 2 und des Empfängers 5 positionsverstellbar angeordnet. Der Sender 2, der Empfänger 5 sowie die diesen zugeordnete Sendeoptik 7 und Empfangsoptik 8 sind in einem gemeinsamen Tubus integriert. Im vorliegenden Fall wird die Niederdruckmasse 13, die in das in Figur 2 nicht dargestellte Gehäuse 12 eingespritzt wird, zugleich als Stellelement zur Positionsverstellung der Leiterplatten 10, 10' als auch als Mittel zur Lagefixierung der Leiterplatten 10, 10' genutzt. Die Positionsverstellung der Leiterplatten 10, 10' erfolgt bevorzugt derart, dass an diese räumlich abgesetzte Einspritzkanäle 14, 14' herangeführt sind. Durch eine geeignete Vorgabe der Reihenfolge, in welcher die Niederdruckmasse 13 in die Einspritzkanäle 14, 14' eingeführt wird, und durch die Vorgabe des Einspritzdrucks in dem jeweiligen Einspritzkanal 14, 14' kann die Positionierung der Leiterplatten 10 durchgeführt werden.

Die Figuren 3a, b zeigen eine Variante der Ausführungsform gemäß Figur 2. Figur 3a zeigt einen Längsschnitt durch den optischen Sensor 1, Figur 3b zeigt einen Querschnitt durch den optischen Sensor 1. Im Innenraum des Gehäuses 12 liegt eine Leiterplatte 10 zur Aufnahme des Empfängers 5 und der Auswerteeinheit 9. In die Leiterplatte 10 sind Schlitze so eingefräst, dass eine über Leiterplattenstege 10a an die Leiterplatte 10 gekoppelte weitere Leiterplatte 10' gebildet wird, auf welcher der Sender 2 liegt. Die Leiterplattenstege 10a sind so dünn, dass diese gebogen werden können, so dass zur Justage des Senders 2 die Leiterplatte 10' in der mit x bezeichneten Richtung gegenüber der Leiterplatte 10 verschoben werden kann. Durch selektives Einspritzen von Niederdruckmasse 13 in die Einspritzkanäle 14, 14' kann die Position der Leiterplatte 10' gezielt verändert und zugleich fixiert werden. Wie aus Figur 3b ersichtlich, sind die Einspritzkanäle 14, 14' durch einen Trennsteg 20 als Bestandteil des Gehäuses 12 getrennt.

Zudem sind die Zwischenräume zwischen den Leiterplatten 10, 10' durch Abdeckungen 21 abgedichtet, so dass die Niederdruckmasse 13 nicht in den Bereich des Austrittsfensters 18 gelangen kann. Wie aus Figur 3a ersichtlich, wird zuerst Niederdruckmasse 13 in den Einspritzkanal 14' eingespritzt, wodurch die Leiterplatte 10' zur Justierung des Senders 2 in der Zwischenebene nach links ausgelenkt wird. Nach Erkalten der Niederdruckmasse 13 wird zur weiteren Lagefixierung der in Figur 3a dargestellten Justageposition des Senders 2, Niederdruckmasse 13 auch in den Einspritzkanal 14 eingespritzt.

## Patentansprüche

1. Verfahren zur Justage wenigstens eines Optikelements eines optischen Sensors, wobei dieser als Optikelemente wenigstens einen Sendelichtstrahlen emittierenden Sender (2) und wenigstens einen Empfangslichtstrahlen empfangenden Empfänger (5) aufweist, welche innerhalb eines Gehäuses angeordnet sind, **dadurch gekennzeichnet, dass** das wenigstens eine Optikelement durch wenigstens ein in das Gehäuse integriertes Stellelement justiert wird, und dann das justierte Optikelement durch eine in das Gehäuse (12) eingespritzte Niederdruckmasse (13) lagefixiert wird, wobei die Niederdruckmasse (13) ein Dichtmittel für das Gehäuse (12) bildet, wobei das Stellelement von der Niederdruckmasse (13) gebildet ist, wobei zur Ausbildung des Stellelements die Niederdruckmasse (13) durch Einspritzkanäle (14, 14') zu dem zu justierenden Optikelement oder einem das Optikelement aufnehmenden Bauelement geführt wird, und wobei die Justageposition des Optikelements durch Vorgabe der Reihenfolge des Einspritzens von Niederdruckmasse (13) in die einzelnen Einspritzkanälen (14, 14') und/oder durch Vorgabe des Einspritzdrucks, mit welchem Niederdruckmasse (13) in einen Einspritzkanal (14, 14') einspritzbar ist, bestimmt wird.

2. Verfahren nach Anspruch 1, **dadurch gekennzeichnet, dass** der Sender (2) und/oder der Empfänger (5) als Optikelement auf einer Leiterplatte (10) angeordnet sind, wobei mittels des Stellelements die Position der Leiterplatte (10) justierbar ist.

3. Verfahren nach einem der Ansprüche 1 oder 2, **dadurch gekennzeichnet, dass** als Optikelement eine Sendeoptik (7) oder eine Empfangsoptik (8) in einem Tubus (17) gelagert ist, dessen Position mittels eines Stellelements justierbar ist.

4. Verfahren nach einem der Ansprüche 1 bis 3, **dadurch gekennzeichnet, dass** der Sender (2) und eine Sendeoptik (7) als Optikelement in einem Kollimator integriert sind, dessen Position mittels eines Stellelements justiert wird.

5. Verfahren nach einem der Ansprüche 1 bis 4, **dadurch gekennzeichnet, dass** als Optikelement eine Blende (11) dem Sender (2) oder Empfänger (5) zugeordnet ist, dessen Position mittels eines Stellelements justiert wird.

6. Verfahren nach einem der Ansprüche 1 bis 5, **dadurch gekennzeichnet, dass** mittels eines Stellelements die Position eines Sendelichtleiters bezüglich des Senders (2) justiert wird.

## Claims

1. Method of adjusting at least one optical element of an optical sensor, wherein this comprises, as optical elements, at least one transmitter (2) emitting transmitted light beams and at least one receiver (5) receiving received light beams, the transmitter and receiver being arranged within a housing, **characterised in that** the at least one optical element is adjusted by at least one setting element integrated in the housing and then the adjusted optical element is positionally fixed by a low-pressure material (13) injected into the housing (12), wherein the low-pressure material (13) forms a sealing means for the housing (12), wherein the setting element is formed by the low-pressure material (13), wherein for formation of the setting element the low-pressure material (13) is led through injection channels (14, 14') to the optical element, which is to be adjusted, or to a component receiving the optical element, and wherein the adjusted position of the optical element is determined by presetting the sequence of injection of low-pressure material (13) into the individual injection channels (14, 14') and/or by presetting the injection pressure at which the low-pressure material (13) is injectable into an injection channel (14, 14').

2. Method according to claim 1, **characterised in that** the transmitter (2) and/or the receiver (5) is or are arranged as optical element on a circuitboard (10), wherein the position of the circuitboard (10) is adjustable by means of the setting element.

3. Method according one of claims 1 and 2, **characterised in that** as optical element a transmission optical system (7) or a receiving optical system (8) is mounted in a tubus (17), the position of which is adjustable by means of a setting element.

4. Method according to any one of claims 1 to 3, **characterised in that** the transmitter (2) and a transmission optical system (7) are integrated as optical element in a collimator, the position of which is adjusted by means of a setting element.

5. Method according to any one of claims 1 to 4, **characterised in that** as optical element an aperture (11), the position of which is adjusted by means of a setting element, is associated with the transmitter (2) or receiver (5).

6. Method according to any one of claims 1 to 5, **characterised in that** the position of a transmitted light conductor is adjusted with respect to the transmitter (2) by means of a setting element.

## Revendications

1. Procédé d'ajustement d'au moins un élément optique d'un capteur optique, lequel présente en tant qu'éléments optiques au moins un émetteur (2) émettant des rayons lumineux d'émission et au moins un récepteur (5) recevant des rayons lumineux de réception, lesquels sont disposés à l'intérieur d'un boîtier, **caractérisé en ce** ledit au moins un élément optique est ajusté par au moins un élément de réglage intégré dans le boîtier, et ensuite l'élément optique ajusté est fixé en position par une masse à basse pression (13) injectée dans le boîtier (12), la masse à basse pression (13) formant un moyen d'étanchéité pour le boîtier (12), l'élément de réglage étant formé par la masse à basse pression (13), la masse à basse pression (13) étant guidée à travers des canaux d'injection (14, 14') vers l'élément optique à ajuster ou un élément supportant l'élément optique pour former l'élément de réglage et la position d'ajustement de l'élément optique étant déterminée par prescription de l'ordre dans lequel la masse à basse pression (13) est injectée dans chacun des canaux d'injection (14, 14') et/ou par prescription de la pression d'injection avec laquelle la masse à basse pression (13) peut être injectée dans un canal d'injection (14, 14').

2. Procédé selon la revendication 1, **caractérisé en ce que** l'émetteur (2) et/ou le récepteur (5) sont disposés en tant qu'élément optique sur une carte de circuit imprimé (10), la position de la carte de circuit imprimé (10) pouvant être ajustée au moyen de l'élément de réglage.

3. Procédé selon une des revendications 1 ou 2, **caractérisé en ce qu'**une optique d'émission (7) ou une optique de réception (8) est montée en tant qu'élément optique dans un tube (17) dont la position peut être ajustée au moyen d'un élément de réglage.

4. Procédé selon une des revendications 1 à 3, **caractérisé en ce que** l'émetteur (2) et une optique d'émission (7) sont intégrés en tant qu'éléments optiques dans un collimateur dont la position est ajustée au moyen d'un élément de réglage.

5. Procédé selon une des revendications 1 à 4, **caractérisé en ce qu'**un diaphragme (11) est associé à l'émetteur (2) ou au récepteur (5) en tant qu'élément optique dont la position est ajustée au moyen d'un élément de réglage.

6. Procédé selon une des revendications 1 à 5, **caractérisé en ce que** la position d'un guide de lumière d'émission par rapport à l'émetteur (2) est ajustée au moyen d'un élément de réglage.
